# EUROPEAN PATENT APPLICATION

(11) **EP 4 631 920 A1**
(43) Date of publication of application: **15.10.2025**
(21) Application number: 24766552.4
(22) Date of filing: 15.02.2024
(51) Int. Cl.: C03C 17/30, C03C 17/34

(54) **DECORATED GLASS WITH HIGH RESISTANCE TO FORMING**

(30) Priority: 07.03.2023 ES 202330190
(71) Applicant: Industrias Alcorenses Confederadas S.A., 12110 Alcora (Castellón) (ES)
(72) Inventor: SALVO ESCRICHE, Francisco, 12110 Alcora (Castellón) (ES); MANAFU GEORGIAN, Catalin, 12110 Alcora (Castellón) (ES); CASTILLO RUIZ, Alejandro, 12110 Alcora (Castellón) (ES)
(74) Representative: Garrigues IP, S.L.P.
(86) International application number: PCT/ES2024/070083
(87) International publication number: WO 2024/184559

(57) **Abstract**

The invention relates to decorated glass with high resistance to forming, i.e. a decorated glass with high resistance to machining and bending, comprising at least one decorative coating on at least one of the faces of the glass and at least one coating of at least one silane which is deposited entirely or partially over at least one of the faces of the glass.

## Description

The present invention, decorated glass with high resistance to forming, specifically to machining and bending, describes a glass comprising at least one decorative coating on at least one of the faces of the glass and at least one coating of at least one silane which is deposited entirely or partially over at least one of the faces of the glass.

The invention is encompassed in the field of glass comprising a coating on its surface and which is subjected to forming processes.

### STATE OF THE ART

Glass is a substance that can be considered intermediate between a solid and a liquid. On the one hand, it behaves like a solid at room temperature because, among other properties, it retains its geometry, volume, and dimensions. However, from a crystallographic point of view, it lacks the geometric and periodic arrangement characteristic of a conventional crystalline solid state. It is precisely this structural disorder that brings them closer to a liquid, with which they also share certain properties. For all these reasons, glass has traditionally been described as a liquid with infinite viscosity.

Another characteristic and limiting property of glass is its high fragility or mechanical weakness due to the existence of surface microcracks. This, together with increasingly stringent safety regulations, makes it necessary to subject a glass piece to mechanical reinforcement processes, the most commonly used process in the state of the art being thermal tempering, as described, for example, in patent application EP3109207A1. In this case, the glass piece is subjected to heat treatment at a temperature close to its softening point, followed by rapid cooling. This generates surface compressive stresses that increase the mechanical and thermal resistance of the glass piece without affecting its optical properties. Therefore, in the case of subjecting the glass to mechanical processes such as cutting, impact, bending, bevelling, corner rounding, drilling, etc., the glass piece breaks into small fragments with a resulting reduction in the risk of cuts. However, this method in the current state of the art requires that the glass piece be cut or formed prior to the application of the decorative coating.

The state of the art also includes other methodologies intended for the mechanical reinforcement of glass which are grouped under what is referred to as chemical tempering. This process consists of generating compressive stresses produced by a surface modification of the chemical composition of the glass. In this regard, two approaches should be noted.

The first approach involves developing surface layers with a lower thermal expansion coefficient than glass. Therefore, during cooling, the inside of the glass contracts more than the surface, causing compression of said surface. A limitation of this process is that it is not possible to deposit decorative coatings on the glass beforehand, as the surface layer characteristic of chemical tempering affects said coatings.

The second approach involves exchanging ions in the glass with others from an external source, mainly by means of immersing the glass in baths containing metal salts, as described, for example, in patent applications US2004/0221615A1 and WO2014/189866A1 and in patent US6516634B1. This process is particularly effective in the case of alkaline ion exchange in sodium-calcium silicate glass, for example, the replacement of Na⁺ and K⁺ ions with others by means of immersion in molten cation salts. In this case, surface lattice compression occurs, providing mechanical reinforcement. However, this method has a number of limitations. On the one hand, surface devitrification occurs, leading to the creation of crystalline phases that affect transparency and other optical properties. Furthermore, the mechanical improvement depends heavily on the degree of ion exchange and treatment conditions, being very sensitive to variations in these parameters. A final limitation is that the prior application of decorative coatings is not feasible, as they are affected when subjected to this method.

In view of the above, the present invention solves and overcomes the aforementioned drawbacks and limitations.

### GENERAL DESCRIPTION OF THE INVENTION

Throughout the invention and claims the word "comprises" and its variants do not intend to exclude other technical features, additives, components, or steps. Furthermore, the word "comprises" includes the case of "consists of". For those skilled in the art, other objects, advantages and features of the invention will become apparent in part from the description and in part from putting the invention into practice.

Therefore, the present invention has as an object of invention a decorated glass with two faces or surfaces, with high resistance to forming, in particular to machining and bending, according to claim 1. In particular, said glass comprises:
a. at least a first decorative coating deposited on at least one of the two faces of the glass and in a basis weight comprised between 10 g/m² and 500 g/m²;
b. at least a second coating of at least one silane which is selected from the group comprising tetraethoxysilane, 3-mercaptopropyltrimethoxysilane, 3-mercaptopropyltriethoxysilane, 3-glycidyloxypropyltrimethoxysilane, or a mixture thereof and which is deposited entirely or partially over at least the face of the glass where the first coating has been deposited, in a basis weight comprised between 1 g/m² and 10 g/m².

The term decorative coating, as it is used in the present invention, refers to any application of one or more layers of an organic and/or inorganic material which, once deposited on one of the two faces of the glass, provides an aesthetic property. Said decorative coating may comprise, for example, at least one or more particles, where said particles may be, in an illustrative but non-limiting manner, particles of quartz, corundum, zirconium silicate, micas, inorganic pigments, organic pigments, particles of a vitreous nature, among others. In this sense, the present invention contemplates that the coating or decorative coatings may entirely or partially occupy the surface of at least one of the two faces or surfaces of the glass. This leads to a selective arrangement of the decorative coating such that there may be one or more different coatings combined in the same area or occupying different areas of the surface of the glass.

One way to provide a decorative coating is by adding colour. Therefore, the present invention preferably provides that the decorative coating contains at least one inorganic pigment.

As described above, the present invention solves the limitations of the state of the art with regard to the possibility of forming the glass piece comprising at least one decorative coating. To that end, the investigators discovered that the combination of the first decorative coating followed by a second coating with at least one silane, selected from the group comprising tetraethoxysilane, 3-mercaptopropyltrimethoxysilane, 3-mercaptopropyltriethoxysilane, 3-glycidyloxypropyltrimethoxysilane, or a mixture thereof, allows this limitation to be overcome. In this sense, in the present invention said silane is deposited entirely or partially over the decorative coating.

For the purpose of expanding the aesthetic possibilities of the present invention, is contemplated the possibility of depositing particles with a diameter comprised between 1 micrometre and 500 micrometres on at least one of the faces of the glass. Specifically, these particles can be deposited both simultaneously and alternatively on the surface of the glass piece, on the first decorative coating, and/or on the second silane coating. In this sense, said particles are selected from the group comprising quartz, corundum, zirconium silicate, micas, minerals, inorganic pigment, particles of a vitreous nature, or a mixture thereof.

Likewise, the present invention includes that at least one of the coatings is deposited by means of digital injection, airbrushing, roller, vela glazing, screen, or bell technology, or combinations thereof. The selection of the technology will depend on several factors such as the type of coating, the presence or absence of particles and their dimensions, the desired basis weight, among others. In this sense, a person skilled in the art will select in each case the most technology that is most suitable for the deposition of the coating. In the case of digital technology, this is based on drop-on-demand technology.

As mentioned above, the present invention overcomes the limitations of the state of the art with regard to the forming of glass pieces comprising at least one decorative coating without said coating being affected.

More specifically, the invention allows the use of any type of cutting system such as dry cutting with a diamond tip, water jet cutting, laser cutting, among others. Furthermore, the glass piece of the present invention can be subjected to forming processes, preferably machining and bending. Examples of machining and bending processes, in an illustrative but non-limiting manner, are curving, corner rounding, adaptation to different geometries, bevelling, drilling, among others. In this sense, the present invention does not limit the inclusion or incorporation of other processes or steps that provide improvements to the final glass piece.

More specifically, the present invention contemplates that the glass piece is subjected additionally to a treatment which is selected from the group comprising ion exchange, ion implantation, physicochemical strengthening, or a mixture thereof.

In the case of ion exchange, processes involving the exchange of Na⁺, K⁺, Ca²⁺, or Mg²⁺ ions from the surface of the glass piece for other ions, for example, in an illustrative but non-limiting manner, Li⁺, Rb⁺, Cs⁺, Bi⁺, Sr²⁺, Ba²⁺, Ag⁺, Cu²⁺, or a mixture thereof, are contemplated.

Ion implantation consists of depositing on the surface of the glass piece a focused ion beam made to impact the target surface. Specifically, the ion implantation of elements such as N, Cr, C, and Ti with the use of acceleration energies comprised between 10 V and 500 V is contemplated.

Finally, physicochemical strengthening is defined as any process consisting of causing changes and/or physicochemical reactions at a certain temperature, either on the surface or throughout the entire mass of the glass piece. Illustrative but non-limiting examples comprise an IR radiation lamp, UV radiation lamp, microwave radiation, among others.

Another aspect of the present invention is that it is possible to form the glass piece with the decorative coating using a very broad thickness interval, comprised between 3 mm and 20 mm. As a result of this broad range of thicknesses of the piece, its application in a number of sectors is possible. Illustrative but non-limiting examples of application include household appliances, architectural, and furniture sectors, among others.

### DESCRIPTION OF THE FIGURES

To facilitate the description of the present invention and for the purpose of contributing to a better understanding of the features thereof, a set of illustrative and non-limiting figures is included in the present specification as an integral part thereof.
Figure 1 shows a first embodiment of the invention.
Figure 2 shows another embodiment of the invention.
Figure 3 shows another embodiment of the invention.
Figure 4 shows another embodiment of the invention.

### PREFERRED EMBODIMENTS

In order to better understand the features of the invention, some preferred embodiments are described below in a non-limiting manner in reference to the figures. In this sense, the examples are provided by way of illustration and are not intended to be limiting of the present invention. Furthermore, the present invention covers all the possible combinations of particular and preferred embodiments indicated herein.

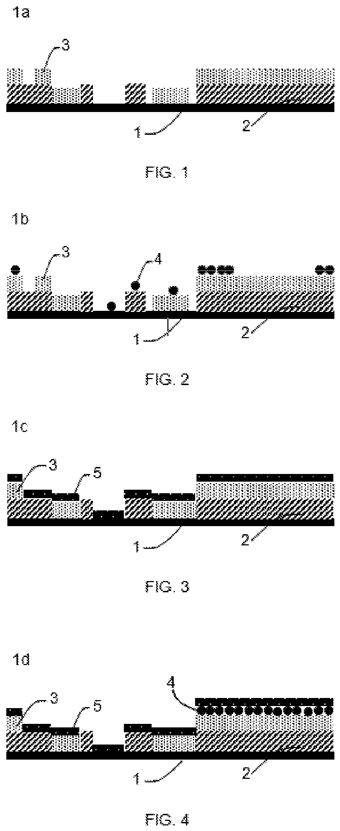

A preferred exemplary embodiment is shown in Figure 1, which schematically depicts the glass piece according to the invention (1a) comprising the glass piece (1) of between 2 mm and 20 mm, at least a first decorative coating (2) deposited on one of the two faces of the glass piece (1), and at least a second silane coating (3) deposited on the same face as the decorative coating (2), according to the invention. In this example, the decorative coating (2) has at least one inorganic pigment and a basis weight comprised between 10 g/m² and 500 g/m², whereas the coating of at least one silane (3) is selected from the group comprising tetraethoxysilane, 3-mercaptopropyltrimethoxysilane, 3-mercaptopropyltriethoxysilane, 3-glycidyloxypropyltrimethoxysilane, or a mixture thereof, with a basis weight comprised between 1 g/m² and 10 g/m².

Another preferred exemplary embodiment is shown in Figure 2, which schematically depicts the glass piece according to the invention (1b) comprising the glass piece (1) of between 2 mm and 20 mm, at least a first decorative coating (2) deposited on one of the two faces of the glass piece (1), at least a second silane coating (3) deposited on the same face as the decorative coating (2), and particles (4) deposited on the same face as the two precious coatings according to the invention. In this example, the decorative coating (2) and the silane coating (3) have the same characteristics as in the preceding example. Likewise, the particles have a diameter of between 1 micrometre and 500 micrometres and are selected from the group comprising quartz, corundum, zirconium silicate, micas, minerals, inorganic pigment, particles of a vitreous nature, or a mixture thereof.

A third preferred exemplary embodiment is shown in Figure 3, which schematically depicts the glass piece according to the invention (1c) comprising the glass piece (1), at least a first decorative coating (2) deposited on one of the two faces of the glass piece (1), at least a second silane coating (3) deposited on the same face as the decorative coating (2), and at least one layer resulting from a treatment by means of ion implantation (5) applied on the same face as the two previous coatings. In this example, the decorative coating (2) and the silane coating (3) have the same characteristics as in the preceding examples.

Another preferred exemplary embodiment is shown in Figure 4, which schematically depicts the glass piece according to the invention (1d) comprising the glass piece (1), at least a first decorative coating (2) deposited on one of the two faces of the glass piece (1), at least a second silane coating (3) deposited on the same face as the decorative coating (2), particles (4) deposited on the same face as the two previous coatings, and at least one layer resulting from a treatment by means of ion implantation (5) applied on the same face. In this example, the decorative coating (2), the silane coating (3), and the deposited particles have the same characteristics as in the preceding examples.

It should be noted that the decorative coating (2) and/or the silane coating (3) can be deposited by means of different technologies, such as digital injection, airbrushing, roller, vela glazing, screen, bell, or combinations thereof.

## Claims

1. A decorated glass with high resistance to forming, **characterised in that** it comprises:
a. at least a first decorative coating deposited on at least one of the two faces of the glass and in a basis weight comprised between 10 g/m² and 500 g/m²;
b. at least a second coating of at least one silane which is selected from the group comprising tetraethoxysilane, 3-mercaptopropyltrimethoxysilane, 3-mercaptopropyltriethoxysilane, 3-glycidyloxypropyltrimethoxysilane, or a mixture thereof and which is deposited entirely or partially over at least the face of the glass where the first coating has been deposited, in a basis weight comprised between 1 g/m² and 10 g/m².

2. The glass according to any of the preceding claims, **characterised in that** the decorative coating occupies entirely or partially the surface of at least one of the two faces of said glass.

3. The glass according to any of the preceding claims, **characterised in that** the decorative coating contains at least one inorganic pigment.

4. The glass according to any of the preceding claims, **characterised in that** the coating comprising at least one silane is deposited entirely or partially over the decorative coating.

5. The glass according to any of the preceding claims, **characterised in that** at least one of the two faces of the glass comprises particles with a diameter between 1 micrometre and 500 micrometres.

6. The glass according to the preceding claim, **characterised in that** the particles are selected from the group comprising quartz, corundum, zirconium silicate, micas, minerals, inorganic pigment, particles of a vitreous nature, or a mixture thereof.

7. The glass according to any of the preceding claims, **characterised in that** at least one of the coatings is deposited by means of digital injection, airbrushing, roller, vela glazing, screen, or bell technology, or combinations thereof.

8. The glass according to any of the preceding claims, **characterised in that** it has been subjected to a treatment selected from the group comprising ion exchange, ion implantation, physicochemical strengthening, or a mixture thereof.

9. The glass according to any of the preceding claims, **characterised in that** the thickness of said glass is comprised between 3 mm and 20 mm.

10. The glass according to any of the preceding claims, **characterised in that** it is used in the household appliance, architectural, and furniture sectors, among others.
